# EUROPEAN PATENT APPLICATION

(11) **EP 4 385 810 A1**
(43) Date of publication of application: **19.06.2024**
(21) Application number: 22855448.1
(22) Date of filing: 09.08.2022
(51) Int. Cl.: B60M 5/00, B60M 3/00

(54) **METHOD FOR REDUCING STRAY CURRENT PRODUCED BY POWER SUPPLY BACKFLOW FOR SUBWAY WALKING RAIL**

(30) Priority: 13.08.2021 CN 202110935584
(71) Applicant: Ma, David, Cherrybrook, New South Wales 2126 (AU); Ma, Jun, Guangzhou, Guangdong 510360 (CN)
(72) Inventor: PANG, Steven Yuxiang, Auckland, 0632 (NZ); MA, Jun, Guangzhou, Guangdong 510360 (CN)
(74) Representative: Winter, Brandl - Partnerschaft mbB
(86) International application number: PCT/CN2022/111226
(87) International publication number: WO 2023/016467

(57) **Abstract**

A system and a method for reducing stray current produced by power supply backflow for a subway walking rail, which is suitable for a power supply system of a rail backflow used by a direct-current power supply subway train. A parallel inductor, a super capacitor, an IGBT switch, a contactor, and the like are used to form a connection branch, and intelligently control the connection and flowing direction of a current, to effectively filter harmonic components of a backflow, so that leakage of harmonic components of a tray current produced by harmonic waves generated by an inverter switch circuit of the train to the outside of the walking rail can be effectively reduced, thereby preventing other facility devices from being harmed by electrochemical corrosion.

## Description

### Field of the Invention:

The present invention relates to and is applicable to a rail-return power supply system adopted by a DC-powered subway train. The solution in the present invention can effectively reduce the leakage of harmonic components of a stray current generated by harmonic waves brought by inverter switch circuits of the train to the outside of a running rail itself, which results in the occurrence of electrochemical corrosion to jeopardize other facilities and devices.

### Background of the Invention:

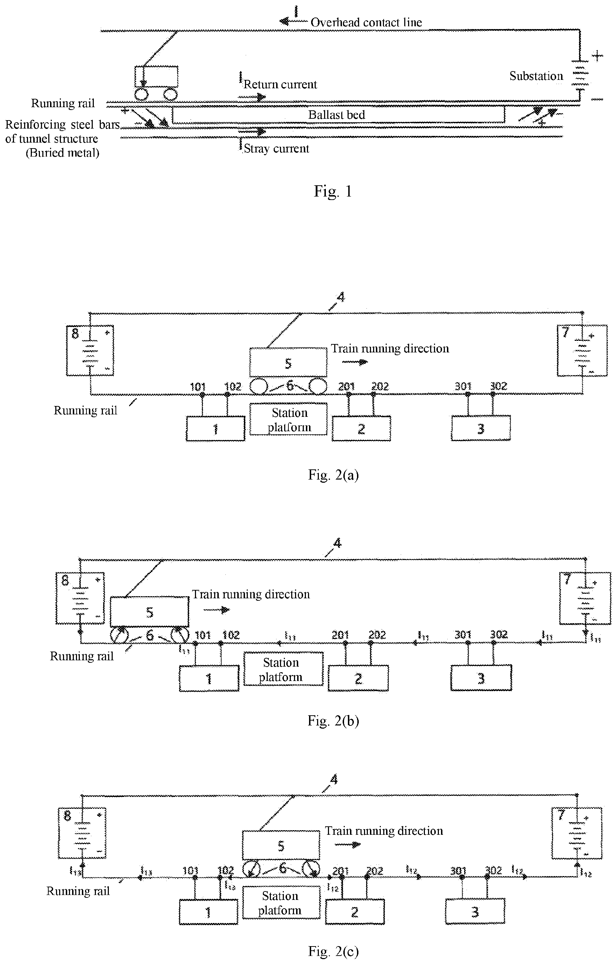

See Fig. 1;
in the prior art, it seeks to reduce the amount of a stray current, including: reducing the rail potential of a running rail, strengthening the ground insulation of DC power supply devices and the running rail, providing stray current collection networks to achieve shielding layer by layer, and utilizing the first passageway (i.e., reinforcing steel bars of a ballast bed structure) of the stray current to form a first shielding network to prevent the leakage of the stray current to the outside of the ballast bed; and connecting the reinforcing steel bars of a tunnel structure to form a second shielding network to prevent the leakage of the stray current to the outside of the tunnel to jeopardize other facilities. However, these measures still cannot well solve the problem of stray current leakage.

Nowadays, the hazards of the stray current in subways of major cities in the world have the following current situation: electrochemical corrosion is caused to buried metal pipelines around subways, communication cable armors, and reinforcing steel bars in main structures of stations and running tunnels, and even to reinforcing steel bars in foundations of surrounding high-rise buildings. Such electrochemical corrosion can not only shorten the service life of metal pipelines, but also reduce the strength and durability of the main structure of subway reinforced concrete, and even lead to catastrophic accidents, which is a common problem of the subways all over the world.

In the face of lines that have been built and opened and new lines under construction, the practical situation of the corrosion hazards of the stray current cannot be changed, and no measure is adopted for filtering of the stray current source, i.e., the running rail itself. Current analysis theories perform analysis from the concept of pure DC, but the inverter of the train is a switching circuit composed of IGBT switches, the fundamental waves when the train is just starting are close to sinusoidal waves, besides a high number of rectangular waves are used to replace the sinusoidal waves from asynchronous modulation to synchronous modulation and in synchronous modulation in control, a square wave is used to replace a half sinusoidal wave finally, and a convergence process of anomalous oscillations also appears at these transition points, so the three phases cannot be balanced at the same time, and it is the same in actual measurements. Therefore, the leaked stray current is composed of a DC component and an AC component, and a running rail with the length of tens of kilometers forms a large capacitor with busbars and the reinforced structural network of the ballast bed. The rail is a positive pole, and the earth is a negative pole. Even if the insulation is done well, due to the small spacing caused by the strength requirements of the reinforcing steel bars of the ballast bed structure corresponding to the supporting rail, I(stray current) = V(rail) · ω · C, for harmonic components, a large C value is also similar to a short circuit to the ground, and the stray current still includes harmonic components after being transmitted to the next level of shielding network, and still forms outgoing leakage, which is an important reason that the stray current is out of control to result in leakage. A common 6-vehicle train set has a return current peak up to 3000 amperes; although the stray current only accounts for a small part, its absolute value is still not small; and the harmonic components in the stray current are more hazardous. Due to factors such as after running of the train, after temperature rising of the rail, or humidity (which will evaporate water), the pure resistors of the rail and the rail foundation become larger, the DC component of the stray current decreases, while the AC component of the stray current remains unchanged.

The existing more effective method is to use a third rail for return currents, the return current does not flow through the running rail, but the cost is extremely high, and it is more critical that the built rail lines simply cannot be reconstructed.

### Summary of the Invention:

Specific to the defects existing in the prior art, an objective of the present invention is to carry out feasible and effective filtering on a running rail itself for the first time to reduce harmonic components of the return current of the rail itself from the origin, thereby reducing the leakage of a stray current.

In order to achieve the above objective, the technical method adopted in the present invention is:
A method for reducing a stray current generated from the power supply return current of a subway running rail, adopts and implements a filtering method with respect to harmonic components of the running rail return-current itself serving as a stray current source; under the state of keeping the physical steel rail of the running rail continuous and unchanged, adopts parallel connection of connecting branches of an inductor, a supercapacitor, an IGBT switch, and a contactor to discharge the supercapacitor by controlling the IGBT switch and the contacts of the contactor, thus forming a voltage to block the forward current conduction of a parallel rail segment, and force the current to go through the parallel branch composed of the inductor, the supercapacitor, the IGBT switch, and the contactor connected in series, so as to effectively filter the harmonic components of the return current; and in the state that the physical steel rail of the running rail is discontinuous, uses an insulated joint while connecting the inductor in parallel, so as to effectively filter the harmonic components of the return current.
A system for reducing a stray current generated from the power supply return current of a subway running rail, comprises a filter connection unit 1, a filter connection unit 2 (selectively used), and a filter connection unit 3;
the filter connection unit 1 is electrically connected at the rail web of the running rail at the tail end of a train 5 when the train stops at a station platform, and is connected with the running rail in parallel,
wherein a first connecting line 101 end of the running rail of the filter connection unit 1 is connected with the running rail at the running rail at the tail end of the train when the train 5 stops at the station platform, and is connected to the negative end of a substation 8 through the running rail; a second connecting line 102 end of the running rail of the filter connection unit 1 is connected with the running rail at the running rail of the train when the train 5 stops at the station platform, and is connected to the negative end of a substation 7 through the running rail, forming a parallel branch;
the filter connection unit 2 is electrically connected at the rail web of the running rail at the head end of the train when the train 5 stops at the station platform, and is connected with the running rail in parallel,
wherein a first connecting line 201 end of the running rail of the filter connection unit 2 is connected with the running rail at the running rail at the head end of the train when the train 5 stops at the station platform, and is connected to the negative end of the substation 8 through the running rail; a second connecting line 202 end of the running rail of the filter connection unit 2 is connected with the running rail at the running rail of the train when the train 5 stops at the station platform, and is connected to the negative end of the substation 7 through the running rail, forming a parallel branch;
the filter connection unit 3 is electrically connected at the rail web of the running rail at the moment that the train 5 completes acceleration to enter a constant speed state, and is connected with the running rail in parallel,
wherein a first connecting line 301 end of the running rail of the filter connection unit 3 is connected with the running rail at the running rail at the moment that the train 5 completes acceleration to enter a constant speed state, and is connected to the negative end of the substation 8 through the running rail; and a second connecting line 302 end of the running rail of the filter connection unit 3 is connected with the running rail at the running rail at the moment that the train 5 completes acceleration to enter a constant speed state, and is connected to the negative end of the substation 7 through the running rail, forming a parallel branch.

The filter connection unit 1, the filter connection unit 2 (selectively used), and the filter connection unit 3 are each connected with the running rail, and are independent operating devices, which are not connected to each other;
the method of the present invention for reducing the stray current generated by the power supply return current of a subway running rail comprises: four practicable technical solutions for filtering the return current of the running rail itself, such as technical solution I of the present invention, technical solution II of the present invention, technical solution III of the present invention, and technical solution IV of the present invention, which are selectively applied according to the actual situation.

### Technical solution I of the present invention:

Technical solution I of the present invention comprises: a filter connection unit 1 of solution I (see Fig. 3(a)), a filter connection unit 2 of solution I (selectively used, see Fig. 4(a)), and a filter connection unit 3 of solution I (see Fig. 5(a));
the filter connection unit 1 of solution I comprises: a first connecting line 101 end of the running rail, an inductor L₁₁₁, a supercapacitor C₁₁₁, a normally-open contact KM₁₁₁ of a contactor, a normally-closed contact KM₁₁₂ of the contactor, a normally-open contact KM₁₁₃ of the contactor, a normally-closed contact KM₁₁₄ of the contactor, a bi-directional conduction IGBT switch Q₁₁₁, and a second connecting line 102 end of the running rail, in which the internal resistor R₁₁₁ of a parallel segment of the running rail, and the series internal resistor R₁₁₂ of the inductor L₁₁₁ and the supercapacitor C₁₁₁ are included,
wherein the first connecting line 101 end of the running rail is welded to the rail web of the running rail to connect the 103 end of the inductor L₁₁₁; the 104 end of the inductor L₁₁₁ is connected to the 105 end of the normally-open contact KM₁₁₁ of the contactor and to the 106 end of the normally-closed contact KM₁₁₄ of the contactor to form a parallel connection; the 107 end of the normally-open contact KM₁₁₁ of the contactor is connected to the positive end 108 of the supercapacitor C₁₁₁, and then connected to the 109 end of the normally-closed contact KM₁₁₂ of the contactor; the 111 end of the normally-closed contact KM₁₁₄ of the contactor is connected to the 112 end of the negative end of the supercapacitor C₁₁₁, and then connected to the 113 end of the normally-open contact KM₁₁₃ of the contactor; the 110 end of the normally-closed contact KM₁₁₂ of the contactor is connected to the 115 end of the bi-directional conduction IGBT switch Q₁₁₁ and to the 114 end of the normally-open contact KM₁₁₃ of the contactor to form a parallel connection; the 116 end of the bi-directional conduction IGBT switch Q₁₁₁ is connected to the second connecting line 102 end of the running rail;
on the basis of the above solution, the running rail itself between the first connecting line 101 end of the running rail and the second connecting line 102 end of the running rail physically keeps unchanged continuously on the whole, including the internal resistor R₁₁₁ of the parallel segment of the running rail; the first connecting line 101 end of the running rail is connected to one end of the internal resistor R₁₁₁ of the parallel segment of the running rail, and the second connecting line 102 end of the running rail is connected to the other end of the internal resistor R₁₁₁ of the parallel segment of the running rail;
the welded connection to the running rail at both the first connecting line 101 end of the running rail and the second connecting line 102 end of the running rail is a brazed connection;
on the basis of the above solution, the function of the inductor L₁₁₁ is to block the harmonic components of the return current; the function of the supercapacitor C₁₁₁ is to store energy and discharge electricity; the function of the normally-open contact KM₁₁₁ of the contactor, the normally-closed contact KM₁₁₂ of the contactor, the normally-open contact KM₁₁₃ of the contactor, and the normally-closed contact KM₁₁₄ of the contactor is to adjust the direction of the current flowing through the supercapacitor C₁₁₁; the inductor L₁₁₁ and the supercapacitor C₁₁₁ are connected in series, including the total internal resistor R₁₁₂; the bi-directional conduction IGBT switch Q₁₁₁ has an intelligent control capability controlled by a control chip, with the function of controlling the forward and reverse flowing of the current, and carrying out possible overvoltage and overcurrent adjustment and protection on the supercapacitor C₁₁₁ during energy storage and discharging; and the unit is connected by a small quantity of cables on the whole.
the filter connection unit 2 of solution I comprises: a first connecting line 201 end of the running rail, an inductor L₁₂₁, a supercapacitor C₁₂₁, a normally-open contact KM₁₂₁ of a contactor, a normally-closed contact KM₁₂₂ of the contactor, a normally-open contact KM₁₂₃ of the contactor, a normally-closed contact KM₁₂₄ of the contactor, a bi-directional conduction IGBT switch Q₁₂₁, and a second connecting line 202 end of the running rail, in which the internal resistor R₁₂₁ of a parallel segment of the running rail, and the series internal resistor R₁₂₂ of the inductor L₁₂₁ and the supercapacitor C₁₂₁ are included,
wherein the first connecting line 201 end of the running rail is welded to the rail web of the running rail to connect the 203 end of the inductor L₁₂₁; the 204 end of the inductor L₁₂₁ is connected to the 205 end of the normally-open contact KM₁₂₁ of the contactor and to the 206 end of the normally-closed contact KM₁₂₄ of the contactor to form a parallel connection; the 207 end of the normally-open contact KM₁₂₁ of the contactor is connected to the positive end 208 of the supercapacitor C₁₂₁, and then connected to the 209 end of the normally-closed contact KM₁₂₂ of the contactor; the 211 end of the normally-closed contact KM₁₂₄ of the contactor is connected to the 212 end of the negative end of the supercapacitor C₁₂₁, and then connected to the 213 end of the normally-open contact KM₁₂₃ of the contactor; the 210 end of the normally-closed contact KM₁₂₂ of the contactor is connected to the 215 end f the bi-directional conduction IGBT switch Q₁₂₁ and to the 214 end of the normally-open contact KM₁₂₃ of the contactor to form a parallel connection; the 216 end of the bi-directional conduction IGBT switch Q₁₂₁ is connected to the second connecting line 202 end of the running rail;
on the basis of the above solution, the running rail itself between the first connecting line 201 end of the running rail and the second connecting line 202 end of the running rail physically keeps unchanged continuously on the whole, including the internal resistor R₁₂₁ of the parallel segment of the running rail; the first connecting line 201 end of the running rail is connected to one end of the internal resistor R₁₂₁ of the parallel segment of the running rail, and the second connecting line 202 end of the running rail is connected to the other end of the internal resistor R₁₂₁ of the parallel segment of the running rail;
the welded connection to the running rail at both the first connecting line 201 end of the running rail and the second connecting line 202 end of the running rail is a brazed connection;
on the basis of the above solution, the function of the inductor L₁₂₁ is to block the harmonic components of the return current; the function of the supercapacitor C₁₂₁ is to store energy and discharge electricity; the function of the normally-open contact KM₁₂₁ of the contactor, the normally-closed contact KM₁₂₂ of the contactor, the normally-open contact KM₁₂₃ of the contactor, and the normally-closed contact KM₁₂₄ of the contactor is to adjust the direction of the current flowing through the supercapacitor C₁₂₁; the inductor L₁₂₁ and the supercapacitor C₁₂₁ are connected in series, including the total internal resistor R₁₂₂; the bi-directional conduction IGBT switch Q₁₂₁ has an intelligent control capability controlled by a control chip, with the function of controlling the forward and reverse flowing of the current, and carrying out possible overvoltage and overcurrent adjustment and protection on the supercapacitor C₁₂₁ during energy storage and discharging; and the unit is connected by a small quantity of cables on the whole.
The filter connection unit 3 of solution I comprises: a first connecting line 301 end of the running rail, an inductor L₁₃₁, a supercapacitor C₁₃₁, a bi-directional conduction IGBT switch Q₁₃₁, and a second connecting line 302 end of the running rail, in which the internal resistor R₁₃₁ of a parallel segment of the running rail, and the series internal resistor R₁₃₂ of the inductor L₁₃₁ and the supercapacitor C₁₃₁ are included;
wherein the first connecting line 301 end of the running rail is welded at the rail web of the running rail to connect the 303 end of the inductor L₁₃₁, the 304 end of the inductor L₁₃₁ is connected to the negative end 305 of the supercapacitor C₁₃₁, the positive end 306 of the supercapacitor C₁₃₁ is connected to the 307 end of the bi-directional conduction IGBT switch Q₁₃₁, and the 308 end of the bi-directionally-conducted IGBT switch Q₁₃₁ is connected to the second connecting line 302 end of the running rail;
on the basis of the above solution, the running rail itself between the first connecting line 301 end of the running rail and the second connecting line 302 end of the running rail physically keeps unchanged continuously on the whole, including the internal resistor R₁₃₁ of the parallel segment of the running rail; the first connecting line 301 end of the running rail is connected to one end of the internal resistor R₁₃₁ of the parallel segment of the running rail, and the second connecting line 302 end of the running rail is connected to the other end of the internal resistor R₁₃₁ of the parallel segment of the running rail;
the welded connection to the running rail at both the first connecting line 301 end of the running rail and the second connecting line 302 end of the running rail is a brazed connection;
the function of the inductor L₁₃₁ is to block the harmonic components of the return current; the function of the supercapacitor C₁₃₁ is to store energy and discharge electricity; the inductor L₁₃₁ and the supercapacitor C₁₃₁ are connected in series, including the total internal resistor R₁₃₂; the bi-directional conduction IGBT switch Q₁₃₁ has an intelligent control capability controlled by a control chip, with the function of controlling the forward and reverse flowing of the current, and carrying out possible overvoltage and overcurrent adjustment and protection on the supercapacitor C₁₃₁ during energy storage and discharging; the unit is connected by a small quantity of cables on the whole; and on the basis of the above solution, the bi-directional conduction IGBT switch can be replaced with a contactor.

### Technical solution II of the present invention:

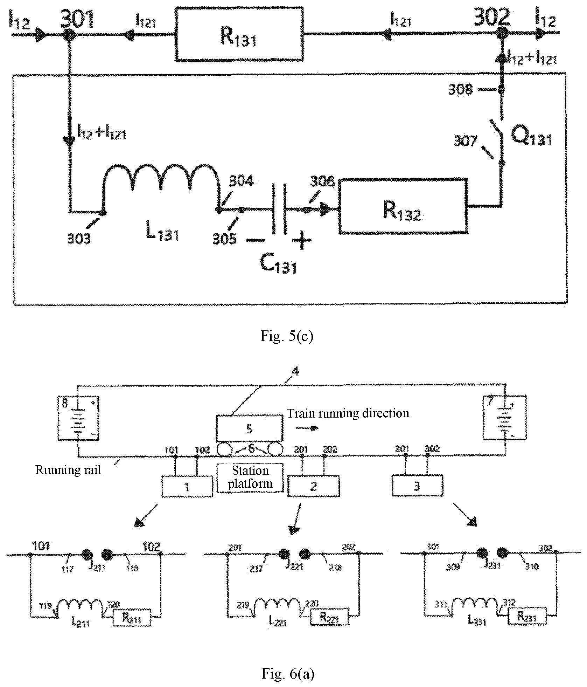

Technical solution II of the present invention comprises: a filter connection unit 1 of solution II, a filter connection unit 2 of solution II (selectively used), and a filter connection unit 3 of solution II;
see Fig. 6(a);
the filter connection unit 1 of solution II comprises: a first connecting line 101 end of the running rail, an insulated joint J₂₁₁, an inductor L₂₁₁, and a second connecting line 102 end of the running rail, in which the internal resistor R₂₁₁ of the inductor L₂₁₁ is included;
wherein the first connecting line 101 end of the running rail is connected to the 119 end of the inductor L₂₁₁ by welding at the rail web of the running rail and connected to the 117 end of the insulated joint J₂₁₁, and the 120 end of the inductor L₂₁₁ is connected to the second connecting line 102 end of the running rail, while the second connecting line 102 end of the running rail is connected to the 118 end of the insulated joint J₂₁₁;
on the basis of the above solution, the insulated joint J₂₁₁ is connected to the continuous position of the non-physical steel rail of the running rail, i.e., conductive isolation is achieved between the 117 end of the insulated joint J₂₁₁ and the 118 end of the insulated joint J₂₁₁, blocking the current loop between the first connecting line 101 end of the running rail and the second connecting line 102 end of the running rail;
the welded connection to the running rail at both the first connecting line 101 end of the running rail and the second connecting line 102 end of the running rail is a brazed connection;
on the basis of the above solution, the inductor L₂₁₁ has the function of blocking the harmonic components of the return current, and the unit is connected with a small number of cables in overall.
The filter connection unit 2 of solution II comprises: a first connecting line 201 end of the running rail, an insulated joint J₂₂₁, an inductor L₂₂₁, and a second connecting line 202 end of the running rail, in which the internal resistor R₂₂₁ of the inductor L₂₂₁ is included;
wherein the first connecting line 201 end of the running rail is connected to the 219 end of the inductor L₂₂₁ by welding at the rail web of the running rail and connected to the 217 end of the insulated joint J₂₁₁, and the 220 end of the inductor L₂₂₁ is connected to the 202 end of the second connecting line of the running rail, while the second connecting line 202 end of the running rail is connected to the 218 end of the insulated joint J₂₂₁;
on the basis of the above solution, the insulated joint J₂₂₁ is connected to the continuous position of the non-physical steel rail of the running rail, i.e., conductive isolation is achieved between the 217 end of the insulated joint J₂₂₁ and the 218 end of the insulated joint J₂₂₁, blocking the current loop between the first connecting line 201 end of the running rail and the second connecting line 202 end of the running rail;
the welded connection to the running rail at both the first connecting line 201 end of the running rail and the second connecting line 202 end of the running rail is a brazed connection;
on the basis of the above solution, the inductor L₂₂₁ has the function of blocking the harmonic components of the return current, and the unit is connected with a small number of cables in overall.
The filter connection unit 3 of solution II comprises: a first connecting line 301 end of the running rail, an insulated joint J₂₃₁, an inductor L₂₃₁, and a second connecting line 302 end of the running rail, in which the internal resistor R₂₃₁ of the inductor L₂₃₁ is included;
wherein the first connecting line 301 end of the running rail is connected to the 311 end of the inductor L₂₃₁ by welding at the rail web of the running rail and connected to the 309 end of the insulated joint J₂₃₁, and the 312 end of the inductor L₂₃₁ is connected to the second connecting line 302 end of the running rail, while the second connecting line 302 end of the running rail is connected to the 310 end of the insulated joint J₂₃₁;
on the basis of the above solution, the insulated joint J₂₃₁ is connected to the continuous position of the non-physical steel rail of the running rail, i.e., conductive isolation is achieved between the 309 end of the insulated joint J₂₃₁ and the 310 end of the insulated joint J₂₃₁, blocking the current loop between the first connecting line 301 end of the running rail and the second connecting line 302 end of the running rail;
the welded connection to the running rail at both the first connecting line 301 end of the running rail and the second connecting line 302 end of the running rail is a brazed connection;
on the basis of the above solution, the inductor L₂₃₁ has the function of blocking the harmonic components of the return current, and the unit is connected with a small number of cables in overall.

### Technical solution III of the present invention:

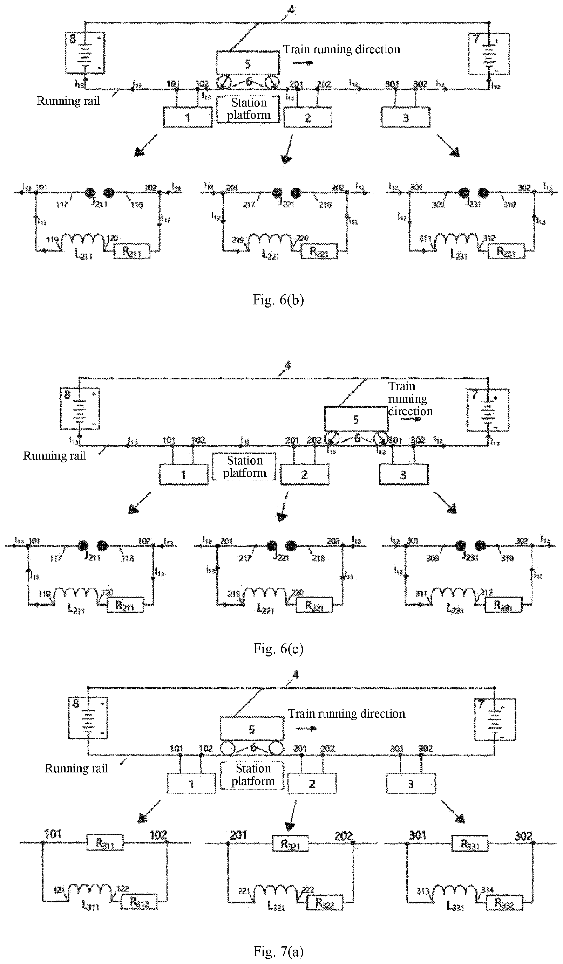

Technical solution III of the present invention comprises: a filter connection unit 1 of solution III, a filter connection unit 2 of solution III (selectively used), and a filter connection unit 3 of solution III;
see Fig. 7(a);
the filter connection unit 1 of solution III comprises: a first connecting line 101 end of the running rail, an inductor L₃₁₁, and a second connecting line 102 end of the running rail, in which the internal resistor R₃₁₁ of a parallel segment of the running rail and the internal resistor R₃₁₂ of the inductor L₃₁₁ are included;
wherein the first connecting line 101 end of the running rail is connected to the 121 end of the inductor L₃₁₁ by welding at the rail web of the running rail, and the 122 end of the inductor L₃₁₁ is connected to the second connecting line 102 end of the running rail;
on the basis of the above solution, the running rail itself between the first connecting line 101 end of the running rail and the second connecting line 102 end of the running rail physically keeps unchanged continuously on the whole, including the internal resistor R₃₁₁ of the parallel segment of the running rail; the first connecting line 101 end of the running rail is connected to one end of the internal resistor R₃₁₁ of the parallel segment of the running rail, and the second connecting line 102 end of the running rail is connected to the other end of the internal resistor R₃₁₁ of the parallel segment of the running rail;
the welded connection to the running rail at both the first connecting line 101 end of the running rail and the second connecting line 102 end of the running rail is a brazed connection;
on the basis of the above solution, the inductor L₃₁₁ has the function of blocking the harmonic components of the return current, and the unit is connected with a small number of cables in overall.
the filter connection unit 2 of solution III comprises: a first connecting line 201 end of the running rail, an inductor L₃₂₁, and a second connecting line 202 end of the running rail, in which the internal resistor R₃₂₁ of a parallel segment of the running rail and the internal resistor R₃₂₂ of the inductor L₃₂₁ are included,
wherein the first connecting line 201 end of the running rail is connected to the 221 end of the inductor L₃₂₁ by welding at the rail web of the running rail, and the 222 end of the inductor L₃₂₁ is connected to the second connecting line 202 end of the running rail;
on the basis of the above solution, the running rail itself between the first connecting line 201 end of the running rail and the second connecting line 202 end of the running rail physically keeps unchanged continuously on the whole, including the internal resistor R₃₂₁ of the parallel segment of the running rail; the first connecting line 201 end of the running rail is connected to one end of the internal resistor R₃₂₁ of the parallel segment of the running rail, and the second connecting line 202 end of the running rail is connected to the other end of the internal resistor R₃₂₁ of the parallel segment of the running rail;
the welded connection to the running rail at both the first connecting line 201 end of the running rail and the second connecting line 202 end of the running rail is a brazed connection;
on the basis of the above solution, the inductor L₃₂₁ has the function of blocking the harmonic components of the return current, and the unit is connected with a small number of cables in overall.
The filter connection unit 3 of solution III comprises: a first connecting line 301 end of the running rail, an inductor L₃₃₁, and a second connecting line 302 end of the running rail, in which the internal resistor R₃₃₁ of a parallel segment of the running rail and the internal resistor R₃₃₂ of the inductor L₃₃₁ are included;
wherein the first connecting line 301 end of the running rail is connected to the 313 end of the inductor L₃₃₁ by welding at the rail web of the running rail, and the 314 end of the inductor L₃₃₁ is connected to the second connecting line 302 end of the running rail;
on the basis of the above solution, the running rail itself between the first connecting line 301 end of the running rail and the second connecting line 302 end of the running rail physically keeps unchanged continuously on the whole, including the internal resistor R₃₃₁ of the parallel segment of the running rail; the first connecting line 301 end of the running rail is connected to one end of the internal resistor R₃₃₁ of the parallel segment of the running rail, and the second connecting line 302 end of the running rail is connected to the other end of the internal resistor R₃₃₁ of the parallel segment of the running rail;
the welded connection to the running rail at both the first connecting line 301 end of the running rail and the second connecting line 302 end of the running rail is a brazed connection;
on the basis of the above solution, the inductor L₃₃₁ has the function of blocking the harmonic components of the return current, and the unit is connected with a small number of cables in overall.

### Technical solution IV of the present invention

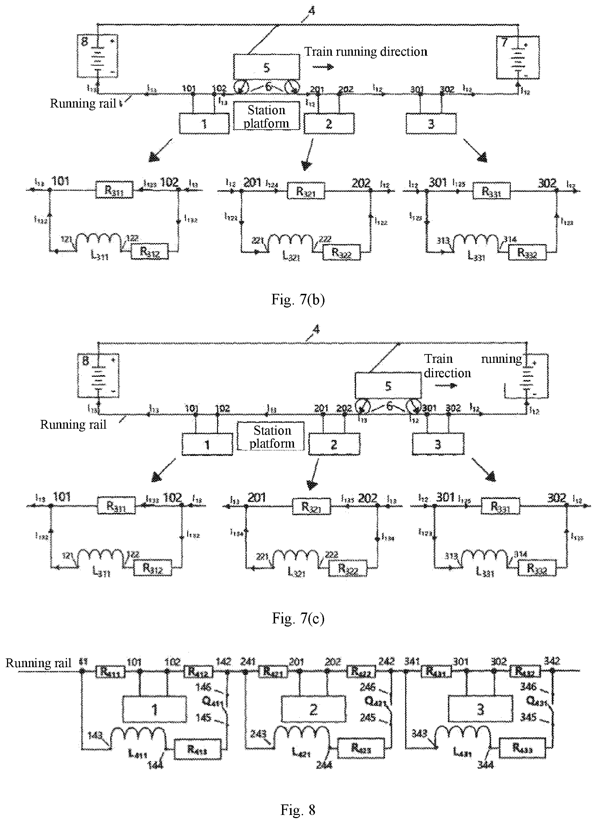

Technical solution IV of the present invention is constituted on the basis of technical solution I of the present invention in combination with technical solution III of the present invention, and is a combined application;
see Fig. 8;
the filter connection unit 1 of solution I is still formed by welding connection of the first connecting line 101 end of the running rail and the second connecting line 102 end to the running rail so as to form a first parallel branch; the filter connection unit 1 of solution III is placed on the periphery of the filter connection unit 1 of solution I, and is formed by welding connection of a third connecting line 141 end of the running rail and a fourth connecting line 142 end of the running rail to the running rail; and a bi-directional conduction IGBT switch Q₄₁₁ is added between the inductor L₄₁₁ (including the internal resistor R₄₁₃) and the fourth connecting line 142 end of the running rail to form a second parallel branch;
wherein the third connecting line 141 end of the running rail is welded to the 143 end of the inductor L₄₁₁, the 144 end of the inductor L₄₁₁ is connected with the 145 end of the bi-directional conduction IGBT switch Q₄₁₁, and the 146 end of the bidirectionally-conducted IGBT switch Q₄₁₁ is connected with the fourth connecting line 142 end of the running rail;
the welded connection to the running rail at both the third connecting line 141 end of the running rail and the fourth connecting line 142 end of the running rail is a brazed connection;
on the basis of the above solution, the running rail still physically keeps unchanged continuously on the whole between the third connecting line 141 end of the running rail and the fourth connecting line 142 end of the running rail, including the internal resistor R₄₁₁ of the parallel segment of the running rail and the internal resistor R₄₁₂ of the parallel segment of the running rail;
on the basis of the above solution, the bi-directional conduction IGBT switch Q₄₂₁ has an intelligent control capability controlled by a control chip, with the function of controlling the switch itself to be off when the supercapcitor C₁₁₁ in the filter connection unit 1 of solution I is charged, so that the capacitor C₁₁₁ is charged under the voltage formed within the internal resistor R₁₁₁ segment of the parallel segment of the running rail.
the filter connection unit 2 of solution I is still formed by welding connection of the first connecting line 201 end of the running rail and the second connecting line 202 end to the running rail so as to form a first parallel branch; the filter connection unit 2 of solution III is placed on the periphery of the filter connection unit 2 of solution I, and is formed by welding connection of a third connecting line 241 end of the running rail and a fourth connecting line 242 end of the running rail to the running rail; and a bi-directional conduction IGBT switch Q₄₂₁ is added between the inductor L₄₂₁ (including the internal resistor R₄₂₃) and the fourth connecting line 242 end of the running rail to form a second parallel branch;
wherein the third connecting line 241 end of the running rail is welded to the 243 end of the inductor L₄₂₁, the 244 end of the inductor L₄₂₁ is connected with the 245 end of the bi-directional conduction IGBT switch Q₄₂₁, and the 246 end of the bidirectionally-conducted IGBT switch Q₄₂₁ is connected with the fourth connecting line 242 end of the running rail;
the welded connection to the running rail at both the third connecting line 241 end of the running rail and the fourth connecting line 242 end of the running rail is a brazed connection;
on the basis of the above solution, the running rail still physically keeps unchanged continuously on the whole between the third connecting line 241 end of the running rail and the fourth connecting line 242 end of the running rail, including the internal resistor R₄₂₁ of the parallel segment of the running rail and the internal resistor R₄₂₂ of the parallel segment of the running rail;
on the basis of the above solution, the bi-directional conduction IGBT switch Q₄₂₁ has an intelligent control capability controlled by a control chip, with the function of controlling the switch itself to be off when the supercapcitor C₁₂₁ in the filter connection unit 2 of solution I is charged, so that the capacitor C₁₂₁ is charged under the voltage formed within the internal resistor R₁₂₁ segment of the parallel segment of the running rail.
The filter connection unit 3 of solution I is still formed by welding connection of the first connecting line 301 end of the running rail and the second connecting line 302 end to the running rail so as to form a first parallel branch; the filter connection unit 3 of solution III is placed on the periphery of the filter connection unit 3 of solution 1, and is formed by welding connection of a third connecting line 341 end of the running rail and a fourth connecting line 342 end of the running rail to the running rail; and a bi-directional conduction IGBT switch Q₄₃₁ is added between the inductor L₄₃₁ (including the internal resistor R₄₃₃) and the fourth connecting line 342 end of the running rail to form a second parallel branch;
wherein the third connecting line 341 end of the running rail is welded to the 343 end of the inductor L₄₃₁, the 344 end of the inductor L₄₃₁ is connected with the 345 end of the bi-directional conduction IGBT switch Q₄₃₁, and the 346 end of the bidirectionally-conducted IGBT switch Q₄₃₁ is connected with the fourth connecting line 342 end of the running rail;
the welded connection to the running rail at both the third connecting line 341 end of the running rail and the fourth connecting line 342 end of the running rail is a brazed connection;
on the basis of the above solution, the running rail still physically keeps unchanged continuously on the whole between the third connecting line 341 end of the running rail and the fourth connecting line 342 end of the running rail, including the internal resistor R₄₃₁ of the parallel segment of the running rail and the internal resistor R₄₃₂ of the parallel segment of the running rail;
on the basis of the above solution, the bi-directional conduction IGBT switch Q₄₃₁ has an intelligent control capability controlled by a control chip, with the function of controlling the switch itself to be off when the supercapcitor C₁₃₁ in the filter connection unit 3 of solution I is charged, so that the capacitor C₁₃₁ is charged under the voltage formed within the internal resistor R₁₃₁ segment of the parallel segment of the running rail; and on the basis of the above solution, the bi-directional conduction IGBT switch can be replaced with a contactor.

### Beneficial effects:

In global rail transportation industry, the present invention adopts and implements a filtering method for the first time with respect to the running rail return-current itself serving as a stray current source, which can substantially extend the service life of reinforcing steel bars of subway structures and surrounding buried metal pipelines, communication cable armors, and even reinforcing steel bars in the cement of foundations of surrounding building groups, so as to improve the safety and reliability thereof, and it has huge economic and social effects and a world-wide promotion market. Technical solution I of the present invention, technical solution III of the present invention, and technical solution IV of the present invention can maintain the current situation of the existing physically continuous rails, without any reconstruction to operated lines, which significantly reduces the cost of use.

Upon starting of a train, an overhead contact line supplies power to the train, the train carries out return current output on the running rail through wheels, and since the train is moving, the traction current of the train is also moving through the return current output ends of the wheels. The train is within the range of the filter connection unit 1, the filter connection unit 2, and the filter connection unit 3 from the stationary segment to the accelerating segment, then the technology used in the present invention is to take filtering measures against the running rail itself to reduce the harmonic components of the stray current, so that the harmonic components of the return current output in the whole accelerating process of the train are filtered, and while the train is out of the range from the above filter connection unit 1 to the filter connection unit 3, the harmonic components of the stray current are reduced to the minimum, and providing the filter connection unit 2 is to reduce the impact of the stray current, formed by the harmonic components of the return current when the train comes into synchronous modulation, on the station.

### Brief Description of the Drawings:

The present invention has the following accompanying drawings:
Fig. 1 shows a structure diagram of an existing anti-stray current technical solution.
Fig. 2(a) is a structure diagram of a system for a method for reducing a stray current generated from the power supply return current of a subway running rail.
Fig. 2(b) is a schematic diagram of the present invention when the train pulls in for electric braking.
Fig. 2(c) is a schematic diagram of the present invention when the train starts to run.

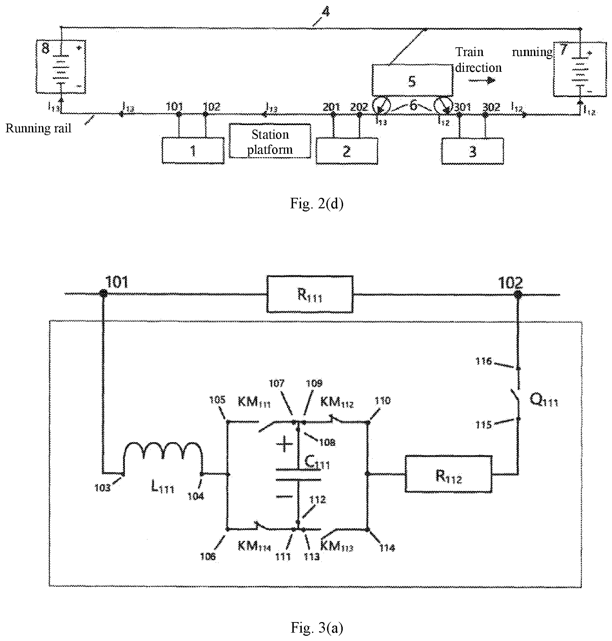

Fig. 2(d) is a schematic diagram of the present invention before the train accelerates and enters a constant speed state.
Fig. 3(a) is a structure diagram of a filter connection unit 1 of technical solution I of the present invention.

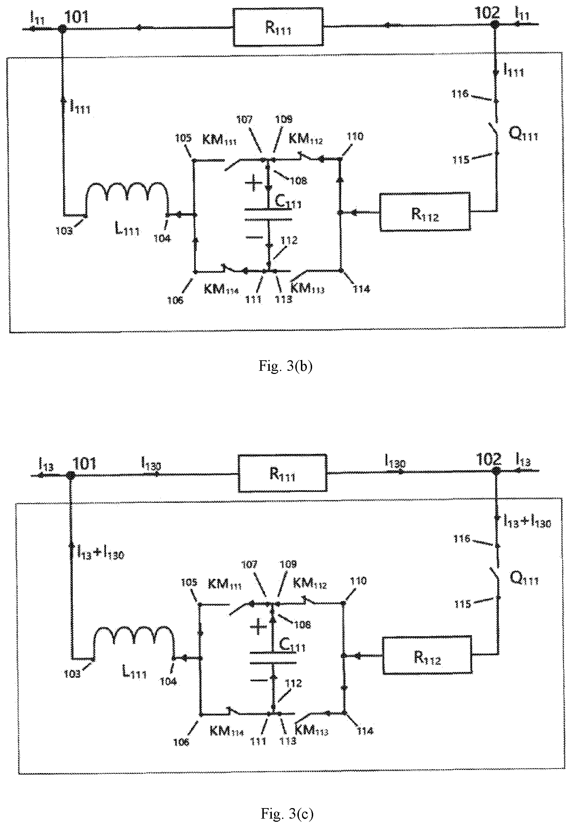

Fig. 3(b) is a diagram showing the switch-on current flowing direction of the filter connection unit 1 of technical solution I of the present invention when the train pulls in for electric braking.
Fig. 3(c) is a diagram showing the switch-on current flowing direction of the filter connection unit 1 of technical solution I of the present invention when the train starts to run until the train completes acceleration to enter a constant speed state.

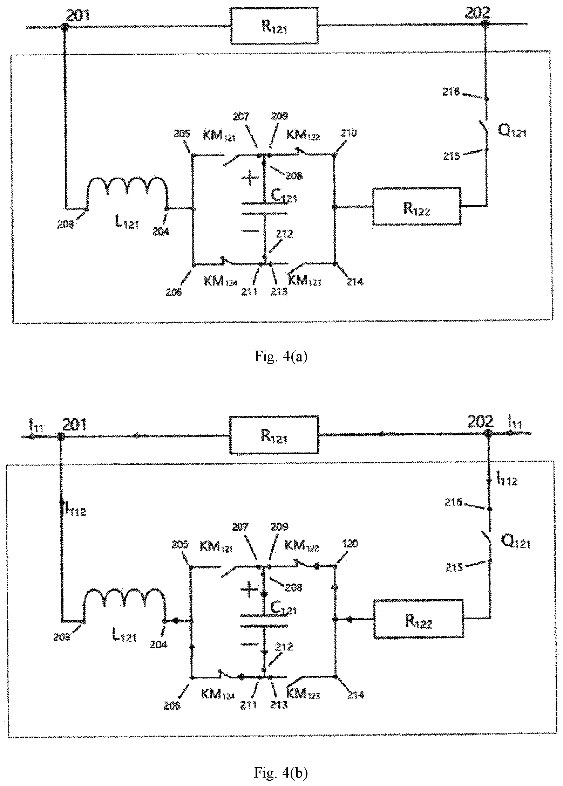

Fig. 4(a) is a structure diagram of a filter connection unit 2 of technical solution I of the present invention.
Fig. 4(b) is a diagram showing the switch-on current flowing direction of the filter connection unit 2 of technical solution I of the present invention when the train pulls in for electric braking.

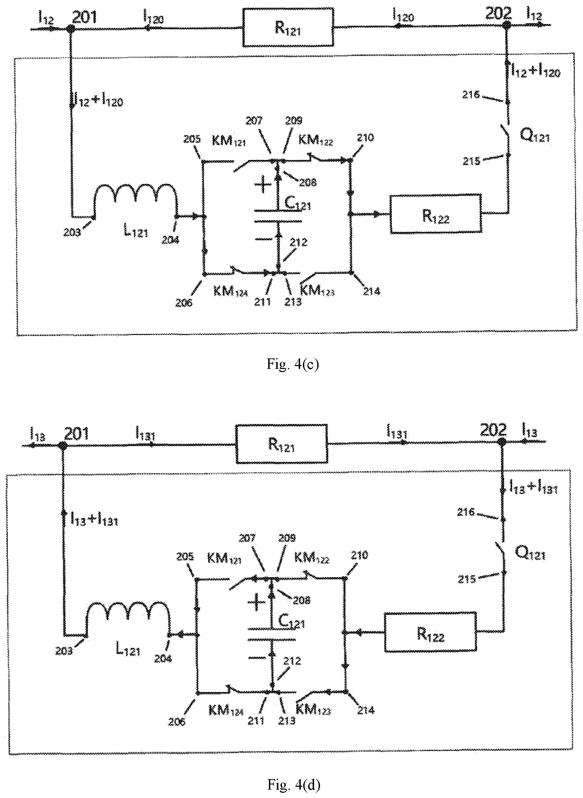

Fig. 4(c) is a diagram showing the switch-on current flowing direction of the filter connection unit 2 of technical solution I of the present invention when the train starts to run.
Fig. 4(d) is a diagram showing the switch-on current flowing direction of the filter connection unit 2 of technical solution I of the present invention before the train accelerates and enters a constant speed state.

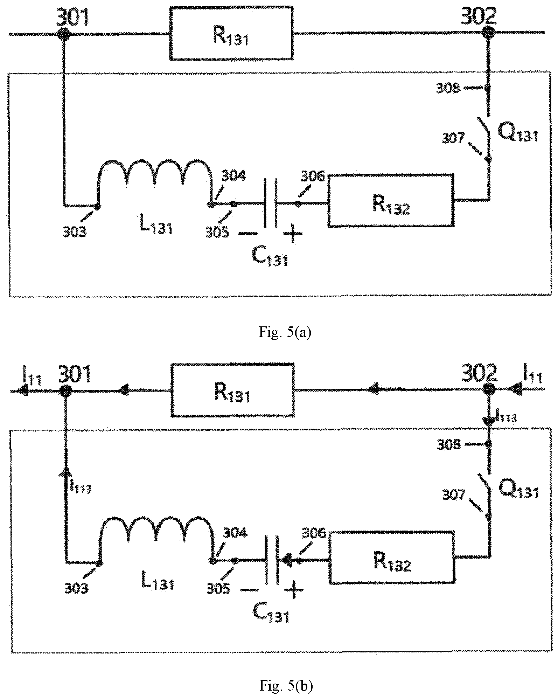

Fig. 5(a) is a structure diagram of a filter connection unit 3 of technical solution I of the present invention.
Fig. 5(b) is a diagram showing the switch-on current flowing direction of the filter connection unit 3 of technical solution I of the present invention when the train pulls in for electric braking.
Fig. 5(c) is a diagram showing the switch-on current flowing direction of the filter connection unit 3 of technical solution I of the present invention when the train starts to run until the train completes acceleration to enter a constant speed state.
Fig. 6(a) is a structure diagram of units of technical solution II of the present invention.
Fig. 6(b) is a diagram showing the current flowing direction of all connection units of technical solution II of the present invention when the train starts to run.
Fig. 6(c) is a diagram showing the switch-on current flowing direction of all connection units of technical solution II of the present invention before the train accelerates and enters a constant speed state.
Fig. 7(a) is a structure diagram of connection units of technical solution III of the present invention.
Fig. 7(b) is a diagram showing the current flowing direction of all connection units of technical solution III of the present invention when the train starts to run. Fig. 7(c) is a diagram showing the current flowing direction of all connection units of technical solution III of the present invention before the train accelerates and enters a constant speed state.
Fig. 8 is a structure diagram of connection units in technical solution IV of the present invention.

### Detailed Description of the Embodiments:

In order to describe the present invention more specifically, the technical solutions of the present invention are described in more detail below in conjunction with the accompanying drawings and specific embodiments. It should be emphasized here that the following description is merely exemplary, but not intended to limit the scope and application of the present invention.

The present invention adopts and implements a filtering method with respect to harmonic components of the running rail return-current itself serving as a stray current source; under the state of keeping the physical steel rail of the running rail continuous and unchanged, adopts parallel connection of connecting branches of an inductor, a supercapacitor, an IGBT switch, and a contactor to discharge the supercapacitor by controlling the IGBT switch and the contacts of the contactor, thus forming a voltage to block the forward current conduction of a parallel rail segment, and force the current to go through the parallel branch composed of the inductor, the supercapacitor, the IGBT switch, and the contactor connected in series, so as to effectively filter the harmonic components of the return current; and in the state that the physical steel rail of the running rail is discontinuous, uses an insulated joint while connecting the inductor in parallel, so as to effectively filter the harmonic components of the return current.

Fig. 2(a) is a structure diagram of a system for a method for reducing a stray current generated from the power supply return current of a subway running rail, comprising a filter connection unit 1, a filter connection unit 2 (selectively used), and a filter connection unit 3.
the filter connection unit 1 is electrically connected at the rail web of the running rail at the tail end of a train 5 when the train stops at a station platform, and is connected with the running rail in parallel;
wherein a first connecting line 101 end of the running rail of the filter connection unit 1 is connected with the running rail at the running rail at the tail end of the train when the train 5 stops at the station platform, and is connected to the negative end of a substation 8 through the running rail; a second connecting line 102 end of the running rail of the filter connection unit 1 is connected with the running rail at the running rail of the train when the train 5 stops at the station platform, and is connected to the negative end of a substation 7 through the running rail, forming a parallel branch;
the filter connection unit 2 is electrically connected at the rail web of the running rail at the head end of the train when the train 5 stops at the station platform, and is connected with the running rail in parallel;
wherein a first connecting line 201 end of the running rail of the filter connection unit 2 is connected with the running rail at the running rail at the head end of the train when the train 5 stops at the station platform, and is connected to the negative end of the substation 8 through the running rail; a second connecting line 202 end of the running rail of the filter connection unit 2 is connected with the running rail at the running rail of the train when the train 5 stops at the station platform, and is connected to the negative end of the substation 7 through the running rail, forming a parallel branch;
the filter connection unit 3 is electrically connected at the rail web of the running rail at the moment that the train 5 completes acceleration to enter a constant speed state, and is connected with the running rail in parallel;
wherein a first connecting line 301 end of the running rail of the filter connection unit 3 is connected with the running rail at the running rail at the moment that the train 5 completes acceleration to enter a constant speed state, and is connected to the negative end of the substation 8 through the running rail; and a second connecting line 302 end of the running rail of the filter connection unit 3 is connected with the running rail at the running rail at the moment that the train 5 completes acceleration to enter a constant speed state, and is connected to the negative end of the substation 7 through the running rail, forming a parallel branch.
As shown in Fig. 2(a), the filter connection unit 1, the filter connection unit 2 (selectively used), and the filter connection unit 3 are each connected with the running rail, and are independent operating devices, which are not connected to each other;
upon starting of a train, as shown in Fig. 2(a), the overhead contact line 4 supplies power to the train 5, the train 5 carries out return current output on the running rail through wheels 6, and since the train is moving, the traction current of the train 5 is also moving through the return current output ends of the wheels 6. The train is within the range of the filter connection unit 1, the filter connection unit 2, and the filter connection unit 3 from the stationary segment to the accelerating segment, then the technology used in the present invention is to take filtering measures against the running rail itself to reduce the harmonic components of the stray current, so that the harmonic components of the return current output in the whole accelerating process of the train 5 are filtered, and while the train is out of the range from the above filter connection unit 1 to the filter connection unit 3, the harmonic components of the stray current are reduced to the minimum, and providing the filter connection unit 2 is to reduce the impact of the stray current, formed by the harmonic components of the return current when the train comes into synchronous modulation, on the station.

Fig. 2(b) shows a schematic diagram of the present invention when the train pulls in for electric braking. When the train 5 pulls in for electric braking, the traction motor thereof is in a generator state, at which point the current I₁₁ flows to the wheels 6 of the train from the negative end of a substation 7 through the running rail; the current is not formed by a switch circuit and has extremely small harmonic waves, so that no filtering method is adopted; and the current I₁₁ flows through the filter connection unit 3, the filter connection unit 2 and the filter connection unit 1 of the present invention to arrive at the wheels 6, so as to enter the train 5.

Fig. 2(c) shows a schematic diagram of the present invention when the train starts to run. When the train 5 starts to run to leave the station platform, the traction motor is in a motor state, at which point the return current I₁₂ is output by the train 5 via the wheels 6 to flow to the negative end of the substation 7 through the running rail, flowing through the filter connection unit 2 and the filter connection unit 3 of the present invention to arrive at the negative end of the substation 7; and meanwhile, the return current I₁₃ is output by the train 5 via the wheels 6 to flow to the negative end of the substation 8 through the running rail, flowing through the filter connection unit 1 to arrive at the negative end of the substation 8.

Fig. 2(d) shows a schematic diagram of the present invention before the train accelerates and enters a constant speed state. When the train accelerates and enters the constant speed state, the position thereof is approaching the filter connection unit 3 of the present invention, at which point the return current I₁₂ is output by the train 5 via the wheels 6 to flow to the negative end of the substation 7 through the running rail, flowing through the filter connection unit 3 of the present invention to arrive at the negative end of the substation 7; and meanwhile the return current I₁₃ is output by the train 5 via the wheels 6 to flow to the negative end of the substation 8 through the running rail, flowing through the filter connection unit 2 and the filter connection unit 1 to arrive at the negative end of the substation 8.

### Technical solution I of the present invention:

Technical solution I of the present invention as shown in Fig. 2(a) comprises: a filter connection unit 1 of solution I, a filter connection unit 2 of solution I (selectively used), and a filter connection unit 3 of solution III;
as shown in Fig. 3(a), the filter connection unit 1 of solution I comprises: a first connecting line 101 end of the running rail, an inductor L₁₁₁, a supercapacitor C₁₁₁, a normally-open contact KM₁₁₁ of a contactor, a normally-closed contact KM₁₁₂ of the contactor, a normally-open contact KM₁₁₃ of the contactor, a normally-closed contact KM₁₁₄ of the contactor, a bi-directional conduction IGBT switch Q₁₁₁, and a second connecting line 102 end of the running rail, in which the internal resistor R₁₁₁ of a parallel segment of the running rail, and the series internal resistor R₁₁₂ of the inductor L₁₁₁ and the supercapacitor C₁₁₁ are included;
wherein the first connecting line 101 end of the running rail is welded to the rail web of the running rail to connect the 103 end of the inductor L₁₁₁; the 104 end of the inductor L₁₁₁ is connected to the 105 end of the normally-open contact KM₁₁₁ of the contactor and to the 106 end of the normally-closed contact KM₁₁₄ of the contactor to form a parallel connection; the 107 end of the normally-open contact KM₁₁₁ of the contactor is connected to the positive end 108 of the supercapacitor C₁₁₁, and then connected to the 109 end of the normally-closed contact KM₁₁₂ of the contactor; the 111 end of the normally-closed contact KM₁₁₄ of the contactor is connected to the 112 end of the negative end of the supercapacitor C₁₁₁, and then connected to the 113 end of the normally-open contact KM₁₁₃ of the contactor; the 110 end of the normally-closed contact KM₁₁₂ of the contactor is connected to the 115 end of the bi-directional conduction IGBT switch Q₁₁₁ and to the 114 end of the normally-open contact KM₁₁₃ of the contactor to form a parallel connection; the 116 end of the bi-directional conduction IGBT switch Q₁₁₁ is connected to the second connecting line 102 end of the running rail;
on the basis of the above solution, the running rail itself between the first connecting line 101 end of the running rail and the second connecting line 102 end of the running rail physically keeps unchanged continuously on the whole, including the internal resistor R₁₁₁ of the parallel segment of the running rail; the first connecting line 101 end of the running rail is connected to one end of the internal resistor R₁₁₁ of the parallel segment of the running rail, and the second connecting line 102 end of the running rail is connected to the other end of the internal resistor R₁₁₁ of the parallel segment of the running rail;
the welded connection to the running rail at both the first connecting line 101 end of the running rail and the second connecting line 102 end of the running rail is a brazed connection;
on the basis of the above solution, the function of the inductor L₁₁₁ is to block the harmonic components of the return current; the function of the supercapacitor C₁₁₁ is to store energy and discharge electricity; the function of the normally-open contact KM₁₁₁ of the contactor, the normally-closed contact KM₁₁₂ of the contactor, the normally-open contact KM₁₁₃ of the contactor, and the normally-closed contact KM₁₁₄ of the contactor is to adjust the direction of the current flowing through the supercapacitor C₁₁₁; the inductor L₁₁₁ and the supercapacitor C₁₁₁ are connected in series, including the total internal resistor R₁₁₂; the bi-directional conduction IGBT switch Q₁₁₁ has an intelligent control capability controlled by a control chip, with the function of controlling the forward and reverse flowing of the current, and carrying out possible overvoltage and overcurrent adjustment and protection on the supercapacitor C₁₁₁ during energy storage and discharging; and the unit is connected by a small quantity of cables on the whole.
As shown in Fig. 4(a), the filter connection unit 2 of solution I comprises: a first connecting line 201 end of the running rail, an inductor L₁₂₁, a supercapacitor C₁₂₁, a normally-open contact KM₁₂₁ of the contactor, a normally-closed contact KM₁₂₂ of the contactor, a normally-open contact KM₁₂₃ of the contactor, a normally-closed contact KM₁₂₄ of the contactor, a bi-directional conduction IGBT switch Q₁₂₁, and a second connecting line 202 end of the running rail, in which the internal resistor R₁₂₁ of the parallel segment of the running rail, and the series internal resistor R₁₂₂ of the inductor L₁₂₁ and the supercapacitor C₁₂₁ are included,
wherein the first connecting line 201 end of the running rail is welded to the rail web of the running rail to connect the 203 end of the inductor L₁₂₁; the 204 end of the inductor L₁₂₁ is connected to the 205 end of the normally-open contact KM₁₂₁ of the contactor and to the 206 end of the normally-closed contact KM₁₂₄ of the contactor to form a parallel connection; the 207 end of the normally-open contact KM₁₂₁ of the contactor is connected to the positive end 208 of the supercapacitor C₁₂₁, and then connected to the 209 end of the normally-closed contact KM₁₂₂ of the contactor; the 211 end of the normally-closed contact KM₁₂₄ of the contactor is connected to the 212 end of the negative end of the supercapacitor C₁₂₁, and then connected to the 213 end of the normally-open contact KM₁₂₃ of the contactor; the 210 end of the normally-closed contact KM₁₂₂ of the contactor is connected to the 215 end of the bi-directional conduction IGBT switch Q₁₂₁ and to the 214 end of the normally-open contact KM₁₂₃ of the contactor to form a parallel connection; the 216 end of the bi-directional conduction IGBT switch Q₁₂₁ is connected to the second connecting line 202 end of the running rail;
on the basis of the above solution, the running rail itself between the first connecting line 201 end of the running rail and the second connecting line 202 end of the running rail physically keeps unchanged continuously on the whole, including the internal resistor R₁₂₁ of the parallel segment of the running rail; the first connecting line 201 end of the running rail is connected to one end of the internal resistor R₁₂₁ of the parallel segment of the running rail, and the second connecting line 202 end of the running rail is connected to the other end of the internal resistor R₁₂₁ of the parallel segment of the running rail;
the welded connection to the running rail at both the first connecting line 201 end of the running rail and the second connecting line 202 end of the running rail is a brazed connection;
on the basis of the above solution, the function of the inductor L₁₂₁ is to block the harmonic components of the return current; the function of the supercapacitor C₁₂₁ is to store energy and discharge electricity; the function of the normally-open contact KM₁₂₁ of the contactor, the normally-closed contact KM₁₂₂ of the contactor, the normally-open contact KM₁₂₃ of the contactor, and the normally-closed contact KM₁₂₄ of the contactor is to adjust the direction of the current flowing through the supercapacitor C₁₂₁; the inductor L₁₂₁ and the supercapacitor C₁₂₁ are connected in series, including the total internal resistor R₁₂₂; the bi-directional conduction IGBT switch Q₁₂₁ has an intelligent control capability controlled by a control chip, with the function of controlling the forward and reverse flowing of the current, and carrying out possible overvoltage and overcurrent adjustment and protection on the supercapacitor C₁₂₁ during energy storage and discharging; and the unit is connected by a small quantity of cables on the whole.
As sown in Fig. 5(a), the filter connection unit 3 of solution I comprises: a first connecting line 301 end of the running rail, an inductor L₁₃₁, a supercapacitor C₁₃₁, a bi-directional conduction IGBT switch Q₁₃₁, and a second connecting line 302 end of the running rail, in which the internal resistor R₁₃₁ of the parallel segment of the running rail, and the series internal resistor R₁₃₂ of the inductor L₁₃₁ and the supercapacitor C₁₃₁ are included;
wherein the first connecting line 301 end of the running rail is welded at the rail web of the running rail to connect the 303 end of the inductor L₁₃₁, the 304 end of the inductor L₁₃₁ is connected to the negative end 305 of the supercapacitor C₁₃₁, the positive end 306 of the supercapacitor C₁₃₁ is connected to the 307 end of the bi-directional conduction IGBT switch Q₁₃₁, and the 308 end of the bi-directionally-conducted IGBT switch Q₁₃₁ is connected to the second connecting line 302 end of the running rail;
on the basis of the above solution, the running rail itself between the first connecting line 301 end of the running rail and the second connecting line 302 end of the running rail physically keeps unchanged continuously on the whole, including the internal resistor R₁₃₁ of the parallel segment of the running rail; the first connecting line 301 end of the running rail is connected to one end of the internal resistor R₁₃₁ of the parallel segment of the running rail, and the second connecting line 302 end of the running rail is connected to the other end of the internal resistor R₁₃₁ of the parallel segment of the running rail;
the welded connection to the running rail at both the first connecting line 301 end of the running rail and the second connecting line 302 end of the running rail is a brazed connection;
on the basis of the above solution, the function of the inductor L₁₃₁ is to block the harmonic components of the return current; the function of the supercapacitor C₁₃₁ is to store energy and discharge electricity; the inductor L₁₃₁ and the supercapacitor C₁₃₁ are connected in series, including the total internal resistor R₁₃₂; the bi-directional conduction IGBT switch Q₁₃₁ has an intelligent control capability controlled by a control chip, with the function of controlling the forward and reverse flowing of the current, and carrying out possible overvoltage and overcurrent adjustment and protection on the supercapacitor C₁₃₁ during energy storage and discharging; the unit is connected by a small quantity of cables on the whole; and on the basis of the above solution, the bi-directional conduction IGBT switch can be replaced with a contactor.

### Embodiment:

In the method for reducing a stray current generated from the power supply return current of a subway running rail, the embodiment of technical solution I of the present invention is as follows:
Fig. 3(b) shows a diagram showing the switch-on current flowing direction of the filter connection unit 1 of solution I of the present invention when the train pulls in for electric braking. When the train 5 pulls in for electric braking as shown in Fig. 2(b), at this point, the bi-directional conduction IGBT switch Q₁₁₁ in the filter connection unit 1 of solution I switches on the circuit, and at the same time, the normally-closed contact KM₁₁₂ of the contactor and the normally-closed contact KM₁₁₄ of the contactor are switched on, the normally-open contact KM₁₁₁ of the contactor and the normally-open contact KM₁₁₃ of the contactor are switched off, and a branch current I₁₁₁ of the current I₁₁ flows through the second connecting line 102 end of the running rail to arrive at the positive end of the supercapacitor C₁₁₁, and then flows from the negative end of the supercapacitor C₁₁₁ to the first connecting line 101 end of the running rail through the inductor L₁₁₁ (in which the internal resistance R₁₁₂ of the inductor L₁₁₁ and the supercapacitor C₁₁₁ is contained), followed by returning to form the current I₁₁ to flow to the wheels 6; and meanwhile, the supercapacitor C₁₁₁ is charged under the voltage formed at the internal resistor R₁₁₁ of the parallel segment of the running rail, and after full charging is achieved or when the train 5 arrives at the filter connection unit 1 of solution I, the bi-directional conduction IGBT switch Q₁₁₁ switches off the circuit.
Fig. 3(c) shows the switch-on current flowing direction of the filter connection unit 1 of solution I when the train starts to run until the train completes acceleration to enter a constant speed state. When the train 5 starts to run to leave the station platform and accelerates as shown in Figs. 2(c) and 2(d), the bi-directional conduction IGBT switch Q₁₁₁ in the filter connection unit 1 of solution I switches on the circuit, while the normally-open contact KM₁₁₁ of the contactor and the normally-open contact KM₁₁₃ of contactor are switched on, the normally-closed contact KM₁₁₂ of the contactor and the normally-closed contact KM₁₁₄ of the contactor are switched off, and the current I₁₃₀ released by the fully-charged supercapacitor C₁₁₁ flows through the inductor L₁₁₁, the first connecting line 101 end of the running rail, the parallel segment of the running rail including the internal resistor R₁₁₁, and the second connecting line 102 end of the running rail from the positive end to the negative end of the supercapacitor C₁₁₁ to form a loop (in which the internal resistor R₁₁₂ of the inductor L₁₁₁ and the supercapacitor C₁₁₁ is included) and to form a voltage, so as to block the return current I₁₃ to flow to the parallel segment of the running rail including the internal resistor R₁₁₁, and force the return current I₁₃ to flow through the parallel branch consisting of the second connecting line 102 end of the running rail, the supercapacitor C₁₁₁, the inductor L₁₁₁, and the first connecting line 101 end of the running rail, the harmonic components of the return current I₁₃ are filtered by the inductor L₁₁₁, and thereafter the return current I₁₃ flows to the negative end of the substation 8 from the first connecting line 101 end of the running rail, while the return current I₁₃₀ flows through the above parallel branch repeatedly; and when the train 5 completes acceleration to enter a constant speed state, the bi-directional conduction IGBT switch Q₁₁₁ switches off the circuit, and all contacts of the contactor in the unit are reset to original positions.
Fig. 4(b) shows a diagram showing the switch-on current flowing direction of the filter connection unit 2 of solution I when the train pulls in for electric braking. When the train 5 pulls in for electric braking as shown in Fig. 2(b), at this point, the bi-directional conduction IGBT switch Q₁₂₁ in the filter connection unit 2 of solution I switches on the circuit, and at the same time, the normally-closed contact KM₁₂₂ of the contactor and the normally-closed contact KM₁₂₄ of the contactor are switched on, the normally-open contact KM₁₂₁ of the contactor and the normally-open contact KM₁₂₃ of the contactor are switched off, and a branch current I₁₁₂ of the current I₁₁ flows through the second connecting line 202 end of the running rail to arrive at the positive end of the supercapacitor C₁₂₁, and then flows from the negative end of the supercapacitor C₁₂₁ to the first connection line 201 end of the running rail through the inductor L₁₂₁ (in which the internal resistance R₁₂₂ of the inductor L₁₂₁ and the supercapacitor C₁₂₁ is contained), followed by returning to form the current I₁₁ to flow to the wheels 6; and meanwhile, the supercapacitor C₁₂₁ is charged under the voltage formed at the internal resistor R₁₂₁ of the parallel segment of the running rail, and after full charging is achieved, the bi-directional conduction IGBT switch Q₁₂₁ switches off the circuit.
Fig. 4(c) shows a diagram showing the switch-on current flowing direction of the filter connection unit 2 of solution I when the train starts to run. When the train 5 starts to leave the station platform as shown in Fig. 2(c), the bi-directional conduction IGBT switch Q₁₂₁ in the filter connection unit 2 of solution I switches on the circuit, and at the same time, the normally-closed contact KM₁₂₂ of the contactor and the normally-closed contact KM₁₂₄ of contactor are switched on, the normally-open contact KM₁₂₁ of the contactor and the normally-open contact KM₁₂₃ of the contactor are switched off, the current I₁₂₀ released by the supercapacitor C₁₂₁ flows through the second connecting line 202 end of the running rail, the parallel segment of the running rail including the internal resistor R₁₂₁, the first connecting line 201 end of the running rail and the inductor L₁₂₁ from the positive end to the negative end of the supercapacitor C₁₂₁ to form a loop (in which the internal resistor R₁₂₂ of the inductor L₁₂₁ and the supercapacitor C₁₂₁ is included) and to form a voltage, so as to block the return current I₁₂ to flow to the parallel segment of the running rail including the internal resistor R₁₂₁, and force the return current I₁₂ to flow through the parallel branch consisting of the first connecting line 201 end of the running rail, the inductor L₁₂₁, the supercapacitor C₁₂₁, and the second connecting line 202 end of the running rail, the harmonic components of the return current I₁₂ are filtered by the inductor L₁₂₁, and thereafter the return current I₁₂ flows to the negative end of the substation 7 from the second connecting line 202 end of the running rail, while the return current I₁₂₀ flows through the above parallel branch repeatedly; and when the train 5 completes acceleration to arrive at the position of the filter connection unit 2 of solution I, the bi-directional conduction IGBT switch Q₁₂₁ is switched off.
Fig. 4(d) shows a diagram showing the switch-on current flowing direction of the filter connection unit 2 of solution I before the train accelerates and enters a constant speed state. When the train 5 starts and accelerates to go beyond the position of the filter connection unit 2 of solution I as shown in Fig. 2(d), the direction of the rail return current becomes opposite to that shown in Fig. 2(c), at which point the normally-open contact KM₁₂₁ of the contactor and the normally-open contact KM₁₂₃ of the contactor in the filter connection unit 2 of solution I are switched on, the normally-closed contact KM₁₂₂ of the contactor and the normally-closed contact KM₁₂₄ of the contactor are switched off, then bi-directional conduction IGBT switch Q₁₂₁ switches on the circuit after a very short time difference, the current I₁₃₁ released by the supercapacitor C₁₂₁ flows through the inductor L₁₂₁, the first connecting line 201 end of the running rail, the parallel segment of the running rail including the internal resistor R₁₂₁, and the second connecting line 202 end of the running rail from the positive end to the negative end of the supercapacitor C₁₂₁ to form a loop (in which the internal resistor R₁₂₂ of the inductor L₁₂₁ and the supercapacitor C₁₂₁ is included) and to form a voltage, so as to block the return current I₁₃ to flow to the parallel segment of the running rail including the internal resistor R₁₂₁, and force the return current I₁₃ to flow through the parallel branch consisting of the second connecting line 202 end of the running rail, the supercapacitor C₁₂₁, the inductor L₁₂₁, and the first connecting line 201 end of the running rail, the harmonic components of the return current I₁₃ are filtered by the inductor L₁₂₁, and thereafter the return current I₁₃ flows to the negative end of the substation 8 from the first connecting line 201 end of the running rail, while the return current I₁₃₁ flows through the above parallel branch repeatedly; and when the train 5 completes acceleration to enter a constant speed state, the bi-directional conduction IGBT switch Q₁₂₁ switches off the circuit, and all contacts of the contactor in the unit are reset to original positions.
Fig. 5(b) shows a diagram showing the switch-on current flowing direction of the filter connection unit 3 of solution I when the train pulls in for electric braking. When the train 5 pulls in for electric braking as shown in Fig. 2(b), at this point, the bi-directional conduction IGBT switch Q₁₃₁ in the filter connection unit 3 of solution I switches on the circuit, and a branch current I₁₁₃ of the current I₁₁ flows through the second connecting line 302 end of the running rail to arrive at the positive end of the supercapacitor C₁₃₁, and then flows from the negative end of the supercapacitor C₁₃₁ to the first connecting line 301 end of the running rail through the inductor L₁₃₁ (in which the internal resistance R₁₃₂ of the inductor L₁₃₁ and the supercapacitor C₁₃₁ is contained), followed by returning to form the current I₁₁ to flow to the wheels 6; and meanwhile, the supercapacitor C₁₃₁ is charged under the voltage formed at the internal resistor R₁₃₁ of the parallel segment of the running rail, and after full charging is achieved, the bi-directional conduction IGBT switch Q₁₃₁ switches off the circuit.
Fig. 5(c) is a diagram showing the switch-on current flowing direction of the filter connection unit 3 of solution I of the present invention when the train starts to run until the train completes acceleration to enter a constant speed state. When the train 5 starts to run to leave the station platform and accelerates as shown in Figs. 2(c) and 2(d), the bi-directional conduction IGBT switch Q₁₃₁ in the filter connection unit 3 of solution I switches on the circuit, the current I₁₂₁ released by the fully-discharged supercapacitor C₁₃₁ flows through the second connecting line 302 end of the running rail, the parallel segment of the running rail including the internal resistor R₁₃₁, the first connecting line 301 end of the running rail and the inductor L₁₃₁ from the positive end to the negative end of the supercapacitor C₁₃₁ to form a loop (in which the internal resistor R₁₃₂ of the inductor L₁₃₁ and the supercapacitor C₁₃₁ is included) and to form a voltage, so as to block the return current I₁₂ to flow to the parallel segment of the running rail including the internal resistor R₁₃₁, and force the return current I₁₂ to flow through the parallel branch consisting of the first connecting line 201 end of the running rail, the inductor L₁₂₁, the supercapacitor C₁₂₁, and the second connecting line 302 end of the running rail, the harmonic components of the return current I₁₂ are filtered by the inductor L₁₃₁, and thereafter the return current I₁₂ flows to the negative end of the substation 7 from the second connecting line 302 end of the running rail, while the return current I₁₂₁ flows through the above parallel branch repeatedly; and when the train 5 completes acceleration to enter a constant speed state, the bi-directional conduction IGBT switch Q₁₁₁ switches off the circuit.

Subway trains are spaced apart by about two minutes or more, and when a second train that subsequently follows repeats the act that the train 5 pulls in for electric braking, as shown in Fig. 2(b), the charging process described above is repeated by the filter connection unit 1 of solution I, the filter connection unit 2 of solution I, and the filter connection unit 3 of solution I;
when the second train repeats the act that the train 5 starts to run to leave the station platform and accelerates as shown in Figs. 2(c) and 2(d), the filtering process described above is repeated by the filter connection unit 1 of solution I, the filter connection unit 2 of solution I, and the filter connection unit 3 of solution I.

Resonance generation needs to be avoided in the aspect of selecting the parameters of the inductors and the supercapacitors;
all bi-directional conduction IGBT switches and all contacts of the contactors in the units are intelligently controlled by a control chip to adjust the change of the current directions of the supercapacitors, and also to carry out possible over-voltage and over-current protection on the supercapacitors;
in the event that an inductor or supercapacitor in any parallel branch of any unit is failed, the bi-directional conduction IGBT switch of this unit immediately switches off the circuit and restores the unit to the state it was in before the use of the present invention, without causing any impact on train running.

Technical solution II of the present invention:
as shown in Fig. 6(a), technical solution II of the present invention comprises: a filter connection unit 1 of solution II, a filter connection unit 2 of solution II (selectively used), and a filter connection unit 3 of solution II;
as shown in Fig. 6(a), the filter connection unit 1 of solution II comprises: a first connecting line 101 end of the running rail, an insulated joint J₂₁₁, an inductor L₂₁₁, and a second connecting line 102 end of the running rail, in which the internal resistor R₂₁₁ of the inductor L₂₁₁ is included,
wherein the first connecting line 101 end of the running rail is connected to the 119 end of the inductor L₂₁₁ by welding at the rail web of the running rail and connected to the 117 end of the insulated joint J₂₁₁, and the 120 end of the inductor L₂₁₁ is connected to the second connecting line 102 end of the running rail, while the second connecting line 102 end of the running rail is connected to the 118 end of the insulated joint J₂₁₁;
on the basis of the above solution, the insulated joint J₂₁₁ is connected to the continuous position of the non-physical steel rail of the running rail, i.e., conductive isolation is achieved between the 117 end of the insulated joint J₂₁₁ and the 118 end of the insulated joint J₂₁₁, blocking the current loop between the first connecting line 101 end of the running rail and the second connecting line 102 end of the running rail;
the welded connection to the running rail at both the first connecting line 101 end of the running rail and the second connecting line 102 end of the running rail is a brazed connection;
on the basis of the above solution, the inductor L₂₁₁ has the function of blocking the harmonic components of the return current, and the unit is connected with a small number of cables in overall.
as shown in Fig. 6(a), the filter connection unit 2 of solution II comprises: a first connecting line 201 end of the running rail, an insulated joint J₂₂₁, an inductor L₂₂₁, and a second connecting line 202 end of the running rail, in which the internal resistor R₂₂₁ of the inductor L₂₂₁ is included,
wherein the first connecting line 201 end of the running rail is connected to the 219 end of the inductor L₂₂₁ by welding at the rail web of the running rail and connected to the 217 end of the insulated joint J₂₂₁, and the 220 end of the inductor L₂₂₁ is connected to the 202 end of the second connecting line of the running rail, while the second connecting line 202 end of the running rail is connected to the 218 end of the insulated joint J₂₂₁;
on the basis of the above solution, the insulated joint J₂₂₁ is connected to the continuous position of the non-physical steel rail of the running rail, i.e., conductive isolation is achieved between the 217 end of the insulated joint J₂₂₁ and the 218 end of the insulated joint J₂₂₁, blocking the current loop between the first connecting line 201 end of the running rail and the second connecting line 202 end of the running rail;
the welded connection to the running rail at both the first connecting line 201 end of the running rail and the second connecting line 202 end of the running rail is a brazed connection;
on the basis of the above solution, the inductor L₂₂₁ has the function of blocking the harmonic components of the return current, and the unit is connected with a small number of cables in overall.
as shown in Fig. 6(a), the filter connection unit 3 of solution II comprises: a first connecting line 301 end of the running rail, an insulated joint J₂₃₁, an inductor L₂₃₁, and a second connecting line 302 end of the running rail, in which the internal resistor R₂₃₁ of the inductor L₂₃₁ is included;
wherein the first connecting line 301 end of the running rail is connected to the 311 end of the inductor L₂₃₁ by welding at the rail web of the running rail and connected to the 309 end of the insulated joint J₂₃₁, and the 312 end of the inductor L₂₃₁ is connected to the second connecting line 302 end of the running rail, while the second connecting line 302 end of the running rail is connected to the 310 end of the insulated joint J₂₃₁;
on the basis of the above solution, the insulated joint J₂₃₁ is connected to the continuous position of the non-physical steel rail of the running rail, i.e., conductive isolation is achieved between the 309 end of the insulated joint J₂₃₁ and the 310 end of the insulated joint J₂₃₁, blocking the current loop between the first connecting line 301 end of the running rail and the second connecting line 302 end of the running rail;
the welded connection to the running rail at both the first connecting line 301 end of the running rail and the second connecting line 302 end of the running rail is a brazed connection;
on the basis of the above solution, the inductor L₂₃₁ has the function of blocking the harmonic components of the return current, and the unit is connected with a small number of cables in overall.

### Embodiment:

In the method for reducing a stray current generated from the power supply return current of a subway running rail, the embodiment of technical solution II of the present invention is as follows:
the harmonic component according to the return current = V · ω · C, the capacitances (C) at all insulated joints in technical solution II of the present invention are extremely small, and the harmonic components flowing through the insulated points are also extremely small;
Fig. 6 (b) is a diagram showing the current flowing direction of the filter connection unit 1 of solution II, the filter connection unit 2 of solution II and the filter connection unit 3 of solution II of the present invention when the train starts to run. When the train 5 starts to leave the station platform as shown in Fig. 2(c), the return current I₁₃ flows to the negative end of the substation 8 by carrying out return current output on the running rail through the wheels 6, at which point the insulated joint J₂₁₁ of the filter connection unit 1 of solution II on the running rail forms a blockage to the return current I₁₃, and the vast majority of I₁₃ flows through the parallel branch consisting of the second connecting line 102 end of the running rail, the inductor L₂₁₁ (including the internal resistor R₂₁₁ thereof), and the first connecting line 101 end of the running rail, and then flows to the negative end of the substation 8, and in this process, the harmonic components of the return current I₁₃ are filtered by the inductor L₂₁₁;
the return current I₁₂ flows to the negative end of the substation 7 by carrying out return current output on the running rail through the wheels 6, at which point the insulated joint J₂₂₁ of the filter connection unit 2 of solution II on the running rail forms a blockage to the return current I₁₂, and the vast majority of I₁₂ flows through the parallel branch consisting of the first connecting line 201 end of the running rail, the inductor L₂₂₁ (including the internal resistor R₂₂₁ thereof), and the second connecting line 202 end of the running rail, and then flows to the negative end of the substation 7, and in this process, the harmonic components of the return current I₁₂ are filtered by the inductor L₂₂₁; at this point, the insulated joint J₂₃₁ of the filter connection unit 3 of solution II on the running rail forms a blockage to the return current I₁₂, and the vast majority of I₁₂ flows through the parallel branch consisting of the first connecting line 301 end of the running rail, the inductor L₂₃₁ (including the internal resistor R₂₃₁ thereof), and the second connecting line 302 end of the running rail, and then flows to the negative end of the substation 7, and in this process, the harmonic components of the return current I₁₂ are filtered by the inductor L₂₃₁.
Fig. 6 (c) is a diagram showing the current flowing direction of the filter connection unit 1 of solution II, the filter connection unit 2 of solution II and the filter connection unit 3 of solution II of the present invention before the train accelerates and enters the constant speed state. When the train 5 starts and accelerates to go beyond the position of the filter connection unit 2 of solution I as shown in Fig. 2(d), at this point, the insulated joint J₂₂₁ of the filter connection unit 2 of solution II on the running rail forms a blockage to the return current I₁₃, and the vast majority of I₁₃ flows through the parallel branch consisting of the second connecting line 202 end of the running rail, the inductor L₂₂₁ (including the internal resistor R₂₂₁ thereof), and the first connecting line 201 end of the running rail, and then flows to the negative end of the substation 8, and in this process, the harmonic components of the return current I₁₃ are filtered by the inductor L₂₂₁;
at this point, the filtering method of the filter connection unit 1 of solution I and the filter connection unit 3 of solution II keeps unchanged as shown in Fig. 6(b).

All units in technical solution II of the present invention may use inductive devices with larger inductance to enhance the filtering effect.

In order for non-impact and smooth running of the running train and ensuring the comfort of the train, the existing rails all use physical steel-rail continuous rails, and the installation of the insulated points will inevitably bring some impact, which brings no small amount of workload to line reconstruction of the operated lines, and increases the daily maintenance cost.

### Technical solution III of the present invention:

As shown in Fig. 7(a), technical solution III of the present invention comprises: a filter connection unit 1 of solution III, a filter connection unit 2 of solution III (selectively used), and a filter connection unit 3 of solution III;
as shown in Fig. 7(a), the filter connection unit 1 of solution III comprises: a first connecting line 101 end of the running rail, an inductor L₃₁₁, and a second connecting line 102 end of the running rail, in which the internal resistor R₃₁₁ of a parallel segment of the running rail and the internal resistor R₃₁₂ of the inductor L₃₁₁ are included,
wherein the first connecting line 101 end of the running rail is connected to the 121 end of the inductor L₃₁₁ by welding at the rail web of the running rail, and the 122 end of the inductor L₃₁₁ is connected to the second connecting line 102 end of the running rail;
on the basis of the above solution, the running rail itself between the first connecting line 101 end of the running rail and the second connecting line 102 end of the running rail physically keeps unchanged continuously on the whole, including the internal resistor R₃₁₁ of the parallel segment of the running rail; the first connecting line 101 end of the running rail is connected to one end of the internal resistor R₃₁₁ of the parallel segment of the running rail, and the second connecting line 102 end of the running rail is connected to the other end of the internal resistor R₃₁₁ of the parallel segment of the running rail;
the welded connection to the running rail at both the first connecting line 101 end of the running rail and the second connecting line 102 end of the running rail is a brazed connection;
on the basis of the above solution, the inductor L₃₁₁ has the function of blocking the harmonic components of the return current, and the unit is connected with a small number of cables in overall.
As shown in Fig. 7(a), the filter connection unit 2 of solution III comprises: a first connecting line 201 end of the running rail, an inductor L₃₂₁, and a second connecting line 202 end of the running rail, in which the internal resistor R₃₂₁ of a parallel segment of the running rail and the internal resistor R₃₂₂ of the inductor L₃₂₁ are included,
wherein the first connecting line 201 end of the running rail is connected to the 221 end of the inductor L₃₂₁ by welding at the rail web of the running rail, and the 222 end of the inductor L₃₂₁ is connected to the second connecting line 202 end of the running rail;
on the basis of the above solution, the running rail itself between the first connecting line 201 end of the running rail and the second connecting line 202 end of the running rail physically keeps unchanged continuously on the whole, including the internal resistor R₃₂₁ of the parallel segment of the running rail; the first connecting line 201 end of the running rail is connected to one end of the internal resistor R₃₂₁ of the parallel segment of the running rail, and the second connecting line 202 end of the running rail is connected to the other end of the internal resistor R₃₂₁ of the parallel segment of the running rail;
the welded connection to the running rail at both the first connecting line 201 end of the running rail and the second connecting line 202 end of the running rail is a brazed connection;
on the basis of the above solution, the inductor L₃₂₁ has the function of blocking the harmonic components of the return current, and the unit is connected with a small number of cables in overall.

As shown in Fig. 7(a), the filter connection unit 3 of solution III comprises: a first connecting line 301 end of the running rail, an inductor L₃₃₁, and a second connecting line 302 end of the running rail, in which the internal resistor R₃₃₁ of a parallel segment of the running rail and the internal resistor R₃₃₂ of the inductor L₃₃₁ are included;
wherein the first connecting line 301 end of the running rail is connected to the 313 end of the inductor L₃₃₁ by welding at the rail web of the running rail, and the 314 end of the inductor L₃₃₁ is connected to the second connecting line 302 end of the running rail;
on the basis of the above solution, the running rail itself between the first connecting line 301 end of the running rail and the second connecting line 302 end of the running rail physically keeps unchanged continuously on the whole, including the internal resistor R₃₃₁ of the parallel segment of the running rail; the first connecting line 301 end of the running rail is connected to one end of the internal resistor R₃₃₁ of the parallel segment of the running rail, and the second connecting line 302 end of the running rail is connected to the other end of the internal resistor R₃₃₁ of the parallel segment of the running rail;
the welded connection to the running rail at both the first connecting line 301 end of the running rail and the second connecting line 302 end of the running rail is a brazed connection;
on the basis of the above solution, the inductor L₃₃₁ has the function of blocking the harmonic components of the return current, and the unit is connected with a small number of cables in overall.

### Embodiment:

In the method for reducing a stray current generated from the power supply return current of a subway running rail, the embodiment of technical solution III of the present invention is as follows:
Fig. 7 (b) is a diagram showing the current flowing direction of the filter connection unit 1 of solution III, the filter connection unit 2 of solution III and the filter connection unit 3 of solution III of the present invention when the train starts to run. When the train 5 starts to leave the station platform as shown in Fig. 2(c), the return current I₁₃ flows to the negative end of the substation 8 by carrying out return current output on the running rail through the wheels 6, at which point the filter connection unit 1 of solution III is connected with the inductor L₃₃₁ in parallel on the physically continuous running rail, the return current I₁₃₃ branched from the return current I₁₃ still flows through the running rail itself, i.e., the internal resistor R₃₁₁ of the parallel segment, while at the second connecting line 102 end of the running rail, the return current I₁₃₂ branched from the return current I₁₃ flows through the parallel branch consisting of the inductor L₃₁₁ (including the internal resistor R₃₁₂ thereof) and the first connecting line 101 end of the running rail, and then flows to the negative end of the substation 8, and in this process, the harmonic components of the return current I₁₃₂ are filtered by the inductor L₃₁₁;
the return current I₁₂ flows to the negative end of the substation 7 by carrying out return current output on the running rail through the wheels 6, at which point the filter connection unit 2 of solution III is connected with the inductor L₃₂₁ in parallel on the physically continuous running rail, the return current I₁₂₄ branched from the return current I₁₂ still flows through the running rail itself, i.e., the internal resistor R₃₂₁ of the parallel segment, while at the first connecting line 201 end of the running rail, the return current I₁₂₂ branched from the return current I₁₂ flows through the parallel branch consisting of the inductor L₃₂₁ (including the internal resistor R₃₂₂ thereof) and the second connecting line 202 end of the running rail, and then flows to the negative end of the substation 7, and in this process, the harmonic components of the return current I₁₂₂ are filtered by the inductor L₃₂₁; at this point, the filter connection unit 3 of solution III is connected with the inductor L₃₃₁ in parallel on the physically continuous running rail, the return current I₁₂₅ branched from the return current I₁₂ still flows through the running rail itself, i.e., the internal resistor R₃₃₁ of the parallel segment, while at the first connecting line 301 end of the running rail, the return current I₁₂₃ branched from the return current I₁₂ flows through the parallel branch consisting of the inductor L₃₃₁ (including the internal resistor R₃₃₂ thereof) and the second connecting line 302 end of the running rail, and then flows to the negative end of the substation 7, and in this process, the harmonic components of the return current I₁₂₃ are filtered by the inductor L₃₃₁.
Fig. 7 (c) is a diagram showing the current flowing direction of the filter connection unit 1 of solution III, the filter connection unit 2 of solution III and the filter connection unit 3 of solution III of the present invention before the train accelerates and enters the constant speed state. When the train 5 starts and accelerates to go beyond the position of the filter connection unit 2 of solution I as shown in Fig. 2(d), the filter connection unit 2 of solution III is connected with the inductor L₃₂₁ in parallel on the physically continuous running rail, the return current I₁₃₅ branched from the return current I₁₃ still flows through the running rail itself, i.e., the internal resistor R₃₂₁ of the parallel segment, while at the second connecting line 202 end of the running rail, the return current I₁₃₄ branched from the return current I₁₃ flows through the parallel branch consisting of the inductor L₃₂₁ (including the internal resistor R₃₂₂ thereof) and the first connecting line 201 end of the running rail, and then flows to the negative end of the substation 8, and in this process, the harmonic components of the return current I₁₃₄ are filtered by the inductor L₃₂₁;
at this point, the filtering method of the filter connection unit 1 of solution III and the filter connection unit 3 of solution III keeps unchanged as shown in Fig. 7(b).

### Technical solution IV of the present invention:

see Fig. 8,
technical solution IV of the present invention is constituted on the basis of technical solution I of the present invention in combination with technical solution III of the present invention, and is a combined application;
As shown in Fig. 8, the filter connection unit 1 of solution I is still formed by welding connection of the first connecting line 101 end of the running rail and the second connecting line 102 end to the running rail so as to form a first parallel branch; the filter connection unit 1 of solution III is placed on the periphery of the filter connection unit 1 of solution I, and is formed by welding connection of a third connecting line 141 end of the running rail and a fourth connecting line 142 end of the running rail to the running rail; and a bi-directional conduction IGBT switch Q₄₁₁ is added between the inductor L₄₁₁ (including the internal resistor R₄₁₃) and the fourth connecting line 142 end of the running rail to form a second parallel branch,
wherein the third connecting line 141 end of the running rail is welded to the 143 end of the inductor L₄₁₁, the 144 end of the inductor L₄₁₁ is connected with the 145 end of the bi-directional conduction IGBT switch Q₄₁₁, and the 146 end of the bidirectionally-conducted IGBT switch Q₄₁₁ is connected with the fourth connecting line 142 end of the running rail;
the welded connection to the running rail at both the third connecting line 141 end of the running rail and the fourth connecting line 142 end of the running rail is a brazed connection;
on the basis of the above solution, the running rail still physically keeps unchanged continuously on the whole between the third connecting line 141 end of the running rail and the fourth connecting line 142 end of the running rail, including the internal resistor R₄₁₁ of the parallel segment of the running rail and the internal resistor R₄₁₂ of the parallel segment of the running rail;
on the basis of the above solution, the bi-directional conduction IGBT switch Q₄₂₁ has an intelligent control capability controlled by a control chip, with the function of controlling the switch itself to be off when the supercapcitor C₁₁₁ in the filter connection unit 1 of solution I is charged, so that the capacitor C₁₁₁ is charged under the voltage formed within the internal resistor R₁₁₁ segment of the parallel segment of the running rail.

As shown in Fig. 8, the filter connection unit 2 of solution I is still formed by welding connection of the first connecting line 201 end of the running rail and the second connecting line 202 end to the running rail so as to form a first parallel branch; the filter connection unit 2 of solution III is placed on the periphery of the filter connection unit 2 of solution I, and is formed by welding connection of a third connecting line 241 end of the running rail and a fourth connecting line 242 end of the running rail to the running rail; and a bi-directional conduction IGBT switch Q₄₂₁ is added between the inductor L₄₂₁ (including the internal resistor R₄₂₃) and the fourth connecting line 242 end of the running rail to form a second parallel branch,
wherein the third connecting line 241 end of the running rail is welded to the 243 end of the inductor L₄₂₁, the 244 end of the inductor L₄₂₁ is connected with the 245 end of the bi-directional conduction IGBT switch Q₄₂₁, and the 246 end of the bidirectionally-conducted IGBT switch Q₄₂₁ is connected with the fourth connecting line 242 end of the running rail;
the welded connection to the running rail at both the third connecting line 241 end of the running rail and the fourth connecting line 242 end of the running rail is a brazed connection;
on the basis of the above solution, the running rail still physically keeps unchanged continuously on the whole between the third connecting line 241 end of the running rail and the fourth connecting line 242 end of the running rail, including the internal resistor R₄₂₁ of the parallel segment of the running rail and the internal resistor R₄₂₂ of the parallel segment of the running rail;
on the basis of the above solution, the bi-directional conduction IGBT switch Q₄₂₁ has an intelligent control capability controlled by a control chip, with the function of controlling the switch itself to be off when the supercapcitor C₁₂₁ in the filter connection unit 2 of solution I is charged, so that the capacitor C₁₂₁ is charged under the voltage formed within the internal resistor R₁₂₁ segment of the parallel segment of the running rail.

As shown in Fig. 8, the filter connection unit 3 of solution I is still formed by welding connection of the first connecting line 301 end of the running rail and the second connecting line 302 end to the running rail so as to form a first parallel branch; the filter connection unit 3 of solution III is placed on the periphery of the filter connection unit 3 of solution I, and is formed by welding connection of a third connecting line 341 end of the running rail and a fourth connecting line 342 end of the running rail to the running rail; and a bi-directional conduction IGBT switch Q₄₃₁ is added between the inductor L₄₃₁ (including the internal resistor R₄₃₃) and the fourth connecting line 342 end of the running rail to form a second parallel branch;
wherein the third connecting line 341 end of the running rail is welded to the 343 end of the inductor L₄₃₁, the 344 end of the inductor L₄₃₁ is connected with the 345 end of the bi-directional conduction IGBT switch Q₄₃₁, and the 346 end of the bidirectionally-conducted IGBT switch Q₄₃₁ is connected with the fourth connecting line 342 end of the running rail;
the welded connection to the running rail at both the third connecting line 341 end of the running rail and the fourth connecting line 342 end of the running rail is a brazed connection;
on the basis of the above solution, the running rail still physically keeps unchanged continuously on the whole between the third connecting line 341 end of the running rail and the fourth connecting line 342 end of the running rail, including the internal resistor R₄₃₁ of the parallel segment of the running rail and the internal resistor R₄₃₂ of the parallel segment of the running rail;
on the basis of the above solution, the bi-directional conduction IGBT switch Q₄₃₁ has an intelligent control capability controlled by a control chip, with the function of controlling the switch itself to be off when the supercapcitor C₁₃₁ in the filter connection unit 3 of solution I is charged, so that the capacitor C₁₃₁ is charged under the voltage formed within the internal resistor R₁₃₁ segment of the parallel segment of the running rail; and on the basis of the above solution, the bi-directional conduction IGBT switch can be replaced with a contactor.

### Embodiment:

In the method for reducing a stray current generated from the power supply return current of a subway running rail, technical solution IV of the present invention is formed on the basis of the specific embodiment of technical solution I of the present invention in conjunction with the specific embodiment of technical solution III of the present invention, with the following embodiment:
Fig. 8 is a structure diagram of connection units in technical solution IV of the present invention. When the train 5 pulls in for electric braking as shown in Fig. 2(b), the first parallel branch composed of the filter connection unit 1 of solution I, the filter connection unit 2 of solution I, and the filter connection unit 3 of solution I still operates based on the embodiment of technical solution I of the present invention; and at this point, the bi-directional conduction IGBT switch Q₄₁₁ added to the filter connection unit 1 of solution III, the bi-directional conduction IGBT switch Q₄₂₁ added to the filter connection unit 2 of solution III, and the bi-directional conduction IGBT switch Q₄₃₁ added to the filter connection unit 3 of solution III are all switched off, so that all supercapacitors in the filter connection unit 1 of solution I, the filter connection unit 2 of solution I, and the filter connection unit 3 of solution I are charged under the voltage formed within the internal resistor segments of respective parallel segments of the running rail.

When the train 5 starts to run to leave the station platform and accelerates as shown in Figs. 2(c) and 2(d), at this point, the first branch composed of the filter connection unit 1 of solution I, the filter connection unit 2 of solution I, and the filter connection unit 3 of solution I still operates based on the embodiment of technical solution I of the present invention; and the second parallel branch, operating through switching on all of the bi-directional conduction IGBT switch Q₄₁₁ of the filter connection unit 1 of solution III, the bi-directional conduction IGBT switch Q₄₂₁ of the filter connection unit 2 of solution III, and the bi-directional conduction IGBT switch Q₄₃₁ of the filter connection unit 3 of solution III, operates based on the embodiment of technical solution III of the present invention, further enhancing the filtering function against the harmonic components of the return current.

In technical solution IV of the present invention, all bi-directional conduction IGBT switches in all units with all contacts of the contactors are intelligently controlled by a control chip to adjust the change of the current directions of the supercapacitors, and also to perform possible over-voltage and over-current protection on the supercapacitors.

In the event that an inductor or supercapacitor in any parallel branch of any unit is failed, the bi-directional conduction IGBT switch of this unit immediately switches off the circuit and restores the unit to the state it was in before the use of the present invention, without causing any impact on train running.

As described above, they are only better specific embodiments of the present invention, but the protection scope of the present invention is not limited thereto. Any changes or substitutions that can be readily conceived by the person skilled in the art within the technical scope disclosed by the present invention shall be encompassed within the protection scope of the present invention. Therefore, the protection scope of the present invention should be subject to that of the claims.

The contents not described in detail in this specification are prior art known to the person of professional skill in the art.

## Claims

1. A method for reducing a stray current generated from the power supply return current of a subway running rail, wherein a filtering method is adopted and implemented with respect to harmonic components of the running rail return-current itself serving as a stray current source.

2. The method of claim 1, wherein under the state of keeping the physical steel rail of the running rail continuous and unchanged, parallel connection of connecting branches of an inductor, a supercapacitor, an IGBT switch, and a contactor is adopted to discharge the supercapacitor by controlling the IGBT switch and the contacts of the contactor, thus forming a voltage to block the forward current conduction of a parallel rail segment, and force the current to go through the parallel branch composed of the inductor, the supercapacitor, the IGBT switch, and the contactor connected in series, so as to effectively filter the harmonic components of the return current.

3. The method of claim 1, wherein in the state that the physical steel rail of the running rail is in a discontinuous state, the inductor is connected in parallel to the rail at the same time, so as to effectively filter the harmonic components of the return current.

4. A system for implementing the method for reducing a stray current generated from the power supply return current of a subway running rail of any of claims 1 to 3, wherein the system comprises a filter module, the filter module comprising a plurality of filter connection units, which at least comprise a filter connection unit 1 and a filter connection unit 3;
wherein the filter connection unit 1 is electrically connected at the rail web of the running rail at the tail end of a train 5 when the train stops at a station platform, and is connected with the running rail in parallel; and the filter connection unit 3 is electrically connected at the rail web of the running rail at the moment that the train 5 completes acceleration to enter a constant speed state, and is connected with the running rail in parallel.

5. The system of claim 4, wherein the plurality of filter connection units further comprise a filter connection unit 2, which is electrically connected at the rail web of the running rail at the head end of the train when the train 5 stops at the station platform, and is connected with the running rail in parallel.

6. The system of claim 5, wherein the plurality of filter connection units of the filter module are each connected with the running rail, and are independent operating devices, which are not connected to each other.

7. The system of any of claims 4 to 6, wherein the plurality of filter connection units of the filter module comprise at least one inductor, respectively, the inductor being used to block the harmonic components of the return current of the running rail.

8. The system of claim 7, wherein at least one filter connection unit of the filter module comprises at least one supercapacitor and at least one switch, which are connected with the inductor in series, and wherein the supercapacitor is used to discharge in the filter connection unit to form a current loop, thus blocking the positive conduction of the parallel rail segment.

9. The system of claim 8, wherein the filter connection unit comprises at least one contactor module, which is used to adjust the direction of the current flowing through the supercapacitor.

10. The system of claim 9, wherein the contactor module comprises a plurality of normally-open contacts of a contactor and a plurality of normally-closed contacts of the contactor, and the supercapacitor is connected with the plurality of normally-open contacts of the contactor and the plurality of normally-closed contacts of the contactor in parallel and/or in series.

11. The system of any of claims 8 to 10, wherein the switch is a bi-directional conduction IGBT switch, which is used to control the forward and reverse flowing of the current, and carry out possible overvoltage and overcurrent adjustment and protection on the supercapacitor.

12. The system of claim 7, wherein the system comprises an insulated joint disposed at the rail web of the running rail, at least one filter connection unit of the filter module may be connected to the rail web of the running rail in parallel through the insulated joint; and the insulated joint is used to block the current loop of the running rail.
